# DEMANDE DE BREVET EUROPEEN

(11) **EP 3 975 353 A1**
(43) Date de publication de la demande: **30.03.2022**
(21) Numéro de dépôt: 20315422.4
(22) Date de dépôt: 28.09.2020
(51) Int. Cl.: H02B 1/056, H02B 1/14

(54) **DISPOSITIF DE DISTRIBUTION ÉLECTRIQUE**

(71) Demandeur: HAGER-ELECTRO SAS, 67210 Obernai (FR)
(72) Inventeur: Deckert, Denis, 67190 Mutzig (FR); Herbrech, Denis, 67210 Valff (FR); Theuer, Markus, 66131 Ensheim (DE)
(74) Mandataire: Cabinet Nuss

(57) **Abrégé**

La présente invention concerne un dispositif de distribution électrique comprenant :
• une barre de distribution de phase (1, 2, 3) logée à l'intérieur d'un boîtier (4), et
• un conducteur de phase (5) s'étendant longitudinalement selon une direction et raccordé électriquement à ladite barre de distribution (1, 2, 3), ledit au moins un conducteur de phase (5) comprenant au moins une extrémité de raccordement (6) saillante à l'extérieur du boîtier (4) au travers d'un premier orifice (41) dudit boîtier (4),
dispositif de distribution caractérisé en ce qu'il comprend un manchon isolant (7) monté coulissant par rapport audit au moins un conducteur de phase (5) le long de la direction entre une position sortie (PS) dans laquelle le manchon isolant (7) recouvre ladite extrémité de raccordement (6) et une position rentrée (PR) dans laquelle ledit manchon isolant (7) est disposé à l'intérieur du boîtier (4).

## Description

La présente invention concerne le domaine des dispositifs de distribution électrique comprenant au moins une barre de distribution.

Dans le domaine tertiaire ou commercial, les dispositifs de distribution, tels que des coffrets de distribution peuvent comprendre trois barres de distribution de phase pour la distribution de trois potentiels de phase et qui sont préférentiellement disposées à la verticale. Ces trois barres de distribution sont habituellement protégées et isolées par un boîtier. Chaque barre de distribution est raccordée à un ou des conducteurs de phase qui sont saillants du boîtier pour permettre le raccordement électrique d'un ou de plusieurs appareils électriques modulaires, par exemple de type disjoncteurs différentiels modulaires, disjoncteurs modulaires à une source de distribution électrique. Par ailleurs, au moins une barre de distribution de neutre peut être également prévue dans le dispositif de distribution et permet habituellement le raccordement d'un câble d'une ligne de neutre que comprend chaque appareil électrique modulaire. Toutefois, le câblage des lignes de neutre des appareils électriques sur la barre de distribution de neutre présente l'inconvénient d'être fastidieux et présente l'autre inconvénient d'augmenter l'encombrement au sein du coffret de distribution. En outre, la distribution des potentiels de phase par l'intermédiaire des conducteurs de phase saillants du boîtier ne se fait pas de façon sécurisée. En effet, du fait que les conducteurs de phase sont saillants du boîtier, le dispositif de distribution de l'art antérieur n'est pas conforme à l'indice de protection IP2X, puisqu'il est possible de les toucher accidentellement notamment lors du raccordement électrique du ou des appareils électriques modulaires dans le dispositif de distribution par l'installateur.

La présente invention a pour but de pallier ces inconvénients et propose une solution permettant de sécuriser la connexion à au moins un conducteur de phase lors du raccordement électrique du ou des appareils électriques modulaires dans le dispositif de distribution par l'installateur.

A cet effet, l'invention concerne un dispositif de distribution électrique selon la revendication 1.

L'invention concerne également un ensemble selon la revendication 12.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] représente une vue en perspective d'une partie du dispositif de distribution électrique selon l'invention,
[Fig. 2] représente une vue en perspective d'une partie du dispositif de distribution électrique montrant l'intérieur du boîtier selon l'invention,
[Fig. 3] représente une vue en perspective d'une partie du dispositif de distribution électrique montrant l'intérieur du boîtier selon l'invention,
[Fig. 4] représente une vue en perspective d'une partie du dispositif de distribution électrique montrant l'intérieur du boîtier et les premiers et deuxièmes moyens de rappel selon l'invention,
[Fig. 5] représente une vue en perspective d'une partie du dispositif de distribution électrique montrant l'intérieur du boîtier selon l'invention auquel est connecté un appareil électrique,
[Fig. 6] représente une vue en perspective d'une barre de distribution de phase ou de neutre du dispositif de distribution électrique selon l'invention,
[Fig. 7] représente une vue en perspective d'un conducteur de phase du dispositif de distribution électrique selon l'invention,
[Fig. 8] représente une vue en perspective d'un manchon isolant du dispositif de distribution électrique selon l'invention,

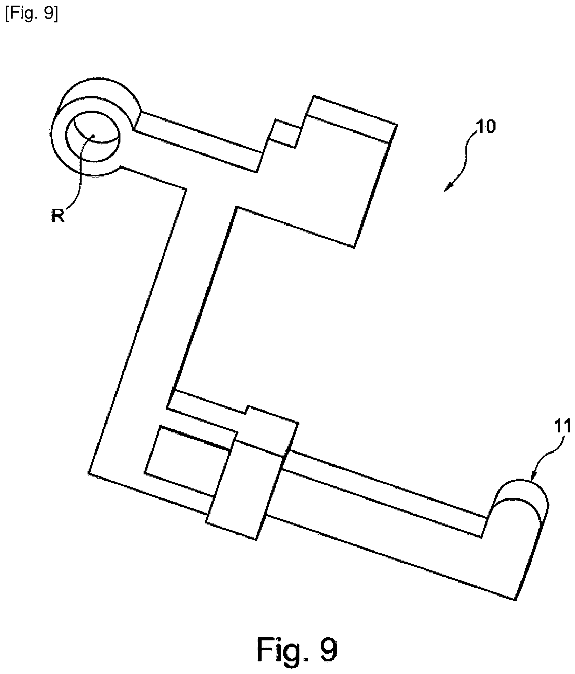

[Fig. 9] représente une vue en perspective d'un organe de verrouillage du dispositif de distribution électrique selon l'invention,
[Fig. 10] représente une vue en coupe d'une partie du dispositif de distribution électrique montrant un premier organe de verrouillage du dispositif de distribution électrique dans une position verrouillée et un deuxième organe de verrouillage dans une position déverrouillée, et
[Fig. 11] représente une vue coupe d'une partie du dispositif de distribution électrique comprenant une barre de distribution de terre à laquelle est connecté l'appareil électrique.

En référence aux figures, un dispositif de distribution électrique comprend au moins :
- une barre de distribution de phase 1, 2, 3 logée à l'intérieur d'un boîtier 4, et
- au moins un conducteur de phase 5 s'étendant longitudinalement selon une direction D et raccordé électriquement à ladite barre de distribution 1, 2, 3, ledit au moins un conducteur de phase 5 comprenant au moins une extrémité de raccordement 6 saillante à l'extérieur du boîtier 4 au travers d'un premier orifice 41 dudit boîtier 4.

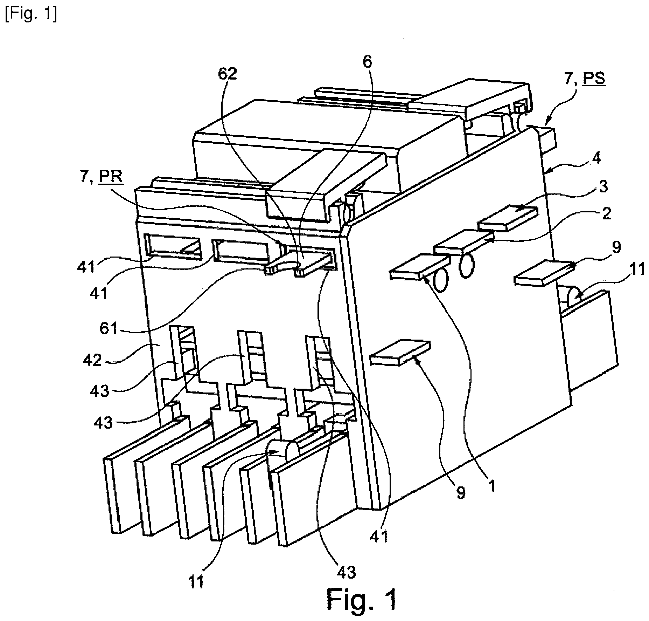

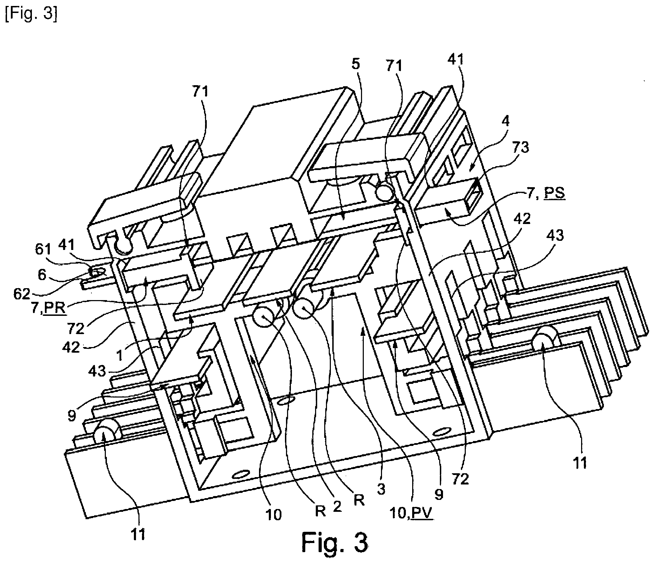

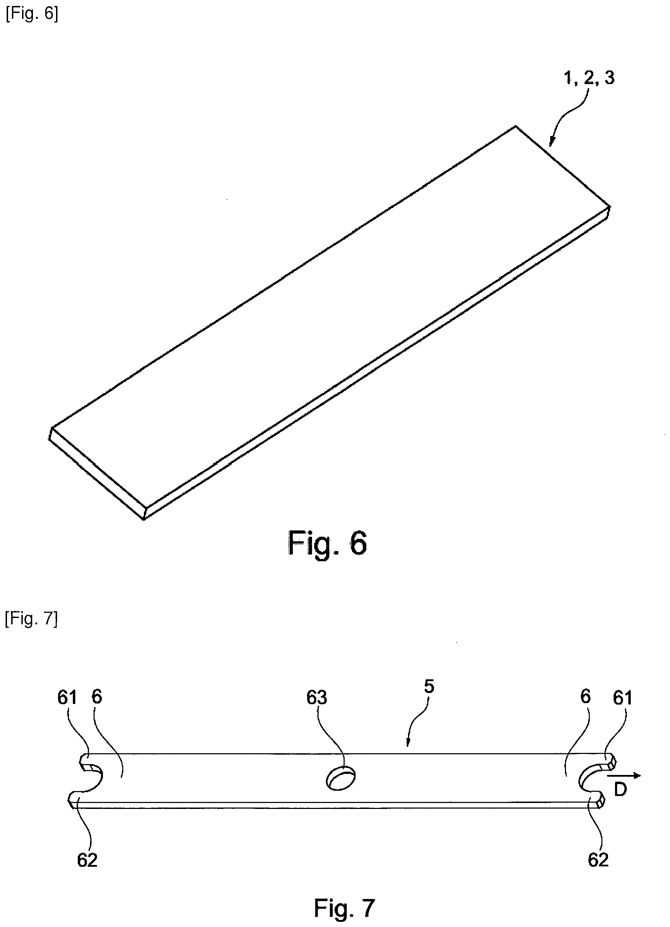

Ladite au moins une barre de distribution de phase 1, 2, 3 est configurée pour être reliée électriquement à un potentiel de phase. Comme l'illustre la figure 6, la barre de distribution de phase 1, 2, 3 se présente préférentiellement sous la forme d'une pièce allongée de section rectangulaire et est de préférence métallique pour être conductrice d'électricité. Comme l'illustrent les figures 1, 2, 3, 4, 5, 10 et 11, le dispositif de distribution électrique comprend, de préférence, trois barres de phase 1, 2, 3 contenues dans un même plan dit premier plan, parallèles entre elles, espacées l'une de l'autre, et disposées au moins en partie à l'intérieur du boîtier 4.

Comme l'illustre la figure 7, ledit au moins un conducteur de phase 5 se présente préférentiellement sous la forme d'une barre allongée selon la direction D et est de préférence métallique pour être conductrice d'électricité. Ce conducteur de phase 5 comprend, de préférence, deux extrémités de raccordement 6. Le conducteur de phase 5 présente de préférence un orifice 63 qui forme un moyen de centrage du conducteur de phase 5 dans le boitier 4. Le raccordement électrique entre ladite au moins une barre de distribution de phase 1, 2, 3 et ledit au moins un conducteur de phase 5 n'est représenté sur aucune figure, mais peut se faire préférentiellement au moyen d'une tresse conductrice soudée ou tout autre moyen.

Une extrémité de raccordement 6 présente préférentiellement une forme de fourche à deux branches 61, 62, comme l'illustre notamment la figure 7.

Préférentiellement, le dispositif de distribution comprend de préférence une pluralité de conducteurs de phase 5 qui sont contenus dans un même plan dit deuxième plan, parallèles entre eux, espacés l'un de l'autre, et disposés à l'intérieur du boîtier 4. Le deuxième plan est de préférence disjoint et parallèle au premier plan. L'espace entre deux conducteurs de phase 5 successifs est prévu pour permettre de recevoir deux appareils électriques modulaires 20 côte à côte, ayant chacun une largeur d'un module ou un appareil électrique modulaire 20 ayant une largeur de deux modules.

De préférence, le conducteur de phase 5 est disposé dans une direction D qui est sensiblement orthogonale à une direction longitudinale selon laquelle la barre de distribution de phase 1, 2, 3 s'étend.

Le boîtier 4 est de préférence en plastique pour être un isolant électrique.

Conformément à l'invention, le dispositif de distribution est caractérisé en ce qu'il comprend au moins un manchon isolant 7 monté coulissant par rapport audit au moins un conducteur de phase 5 le long de la direction D entre une position sortie PS dans laquelle le manchon isolant 7 recouvre ladite extrémité de raccordement 6 et une position rentrée PR dans laquelle- ledit manchon isolant 7 est disposé à l'intérieur du boîtier 4.

Avantageusement, la distribution des potentiels de phases se fait de manière sécurisée du fait de la présence d'un manchon isolant 7 monté coulissant sur le conducteur de phase 5. En effet, lorsque le manchon isolant 7 est dans la position sortie PS, ce dernier recouvre l'extrémité de raccordement 6, ce qui empêche de rentrer en contact électrique avec celle-ci. Il en résulte que l'extrémité de raccordement 6 est isolée électriquement dans la position sortie PS. Par conséquent, lorsqu'aucun appareil électrique modulaire 20 est monté dans le dispositif de distribution électrique selon l'invention, il n'est pas possible à un utilisateur de rentrer accidentellement en contact avec l'extrémité de raccordement 6 du conducteur de phase 5. Le dispositif de distribution selon l'invention est conforme à l'indice de protection IP2X. Au contraire, lorsque le manchon isolant 7 est dans la position rentrée PR, ce dernier ne recouvre pas l'extrémité de raccordement 6, ce qui permet de rentrer en contact électrique avec celle-ci. Il en résulte que l'extrémité de raccordement 6 n'est pas isolée électriquement dans la position sortie PS et peut donc être connectée électriquement à une borne de connexion de la phase 21 de l'appareil électrique modulaire 20. Le passage du manchon isolant 7 de la position sortie PS vers la position rentrée PR se fait par coulissement lors du raccordement électrique de la borne de connexion de la phase 21 de l'appareil électrique modulaire 20. En effet, le boîtier de protection 23 de l'appareil électrique modulaire 20 peut entraîner le mouvement de coulissement selon la direction D en rentrant en contact avec la deuxième extrémité libre 73 du manchon isolant 7. La deuxième extrémité libre 73 est située à l'opposé de la première extrémité 71 du manchon isolant 7 décrite ci-après.

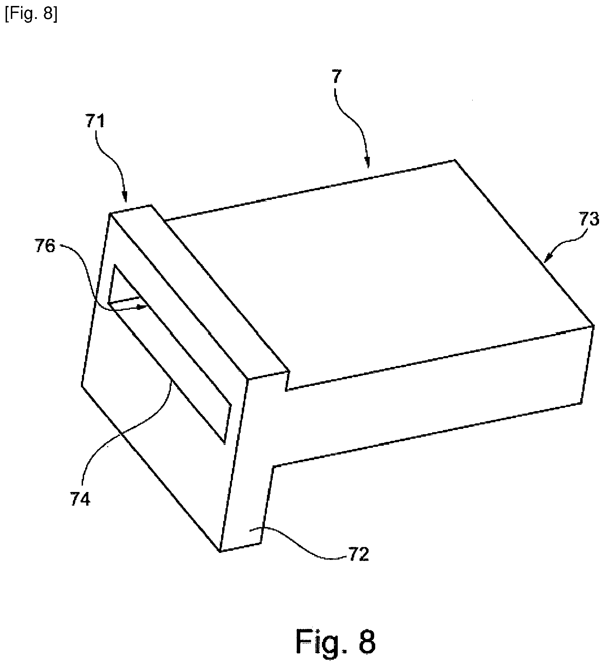

Le manchon isolant 7 qui est illustré notamment à la figure 8 présente un canal 76 débouchant sur la première extrémité 71 par une première ouverture 74 et sur la deuxième extrémité libre 73 par une deuxième ouverture 75. La forme du canal 76 est configurée pour recevoir le conducteur de phase 5 et notamment son extrémité de raccordement 6. Le canal 76 présente une forme sensiblement complémentaire à celle du conducteur de phase 5 et à l'extrémité de raccordement 6. Par exemple, la section du canal 76 sera de préférence rectangulaire.

Le manchon isolant 7 est de préférence en matière isolante électrique, par exemple en plastique.

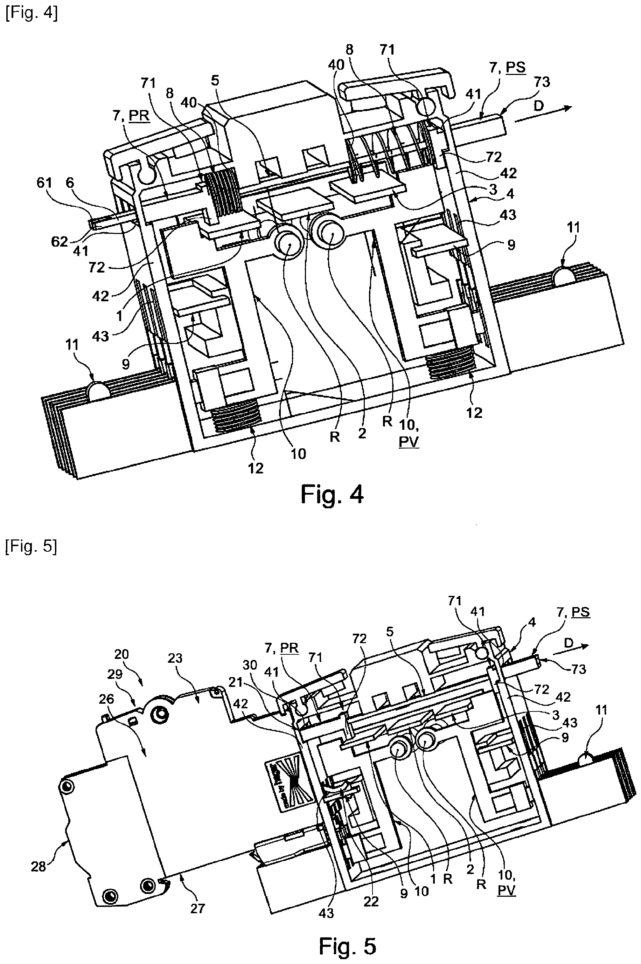

Préférentiellement et comme l'illustre la figure 4, le dispositif de distribution électrique comprend des premiers moyens de rappel 8 disposés à l'intérieur du boîtier 4 et reliés mécaniquement audit manchon isolant 7 et agencés pour emmagasiner de l'énergie mécanique de la position sortie PS vers la position rentrée PR et pour relâcher au moins en partie ladite énergie mécanique de la position rentrée PR vers la position sortie PS.

Avantageusement et comme l'illustre la figure 4, les premiers ?moyens de rappel 8 permettent un retour automatique du manchon isolant 7 de la position rentrée PR vers la position sortie PS. Le manchon isolant 7 est repoussé de l'intérieur du boîtier 4 vers l'extérieur du boîtier 4. Plus particulièrement, lorsqu'une force d'appui est exercée sur la deuxième extrémité libre 73 du manchon isolant 7, par exemple par appui du boîtier de protection 23 de l'appareil électrique modulaire 20 sur la deuxième extrémité libre 73, alors le manchon isolant 7 passe de la position sortie PS vers la position rentrée PR et les premiers moyens de rappel 8 emmagasinent de l'énergie mécanique. Lorsque cette force d'appui cesse, alors les premiers moyens de rappel 8 libèrent au moins une partie de cette énergie mécanique et il en résulte que le manchon isolant 7 passe automatiquement de la position rentrée PR à la positon sortie PS. Cette configuration avantageuse permet de garantir une isolation de l'extrémité de raccordement 6 du conducteur de phase 5 lorsque l'utilisateur retire l'appareil électrique modulaire 20 du dispositif de distribution électrique. Le dispositif de distribution selon l'invention est conforme à l'indice de protection IP2X même en cas de retrait de l'appareil électrique modulaire 20.

De préférence et comme l'illustre la figure 4, les premiers moyens de rappel 8 sont agencés pour être relâchés dans la position sortie PS et en ce que les premiers moyens de rappels 8 sont agencés pour être contraints dans la position rentrée PR.

Les premiers moyens de rappel 8 peuvent comprendre un ressort de préférence hélicoïdal, comme l'illustre la figure 4.

Ce ressort peut être comprimé dans la position rentrée PR et être au repos, c'est-à-dire non contraint dans la position sortie PS du manchon isolant 7.

Les premiers moyens de rappel 8, par exemple le ressort, sont préférentiellement reliés à la première extrémité 71 du manchon isolant 7 et à une paroi interne 40 du boîtier 4 disposée en regard de ladite première extrémité 71.

De préférence, le manchon isolant 7 peut comprendre la première extrémité 71 disposée à l'intérieur du boîtier 4, ladite première extrémité 71 comprenant une butée 72 agencée pour venir en appui contre une paroi 42 du boîtier 4 comprenant ledit premier orifice 41 dans la position de sortie PS.

Avantageusement, la butée 72 permet d'éviter que le manchon isolant 7 soit retiré de l'extrémité de raccordement 6 en position sortie PS, par exemple si un utilisateur tire sur le manchon isolant 7 selon la direction D et vers l'extérieur du boîtier 4.

Préférentiellement, le dispositif de distribution électrique comprend au moins une barre de distribution de neutre 9 logée à l'intérieur dudit boîtier 4 et étant disposée dans un plan dit troisième plan, parallèle au plan comprenant ladite au moins une barre de distribution de phase 1, 2, 3, dit premier plan.

Avantageusement, le dispositif de distribution électrique permet également de distribuer un potentiel de neutre et donc de raccorder ledit au moins un appareil électrique modulaire 20 au potentiel de neutre par l'intermédiaire d'une borne de connexion du neutre 22 décrite ci-après. Comme la barre de distribution de neutre 9 est logée à l'intérieur du boîtier 4, le dispositif de distribution selon l'invention est conforme à l'indice de protection IP2X.

Dans ce cas, ledit boîtier 4 comprend, de préférence, un deuxième orifice 43 débouchant sur ladite barre de distribution de neutre 9.

Préférentiellement, la paroi 42 comprend ce deuxième orifice 43.

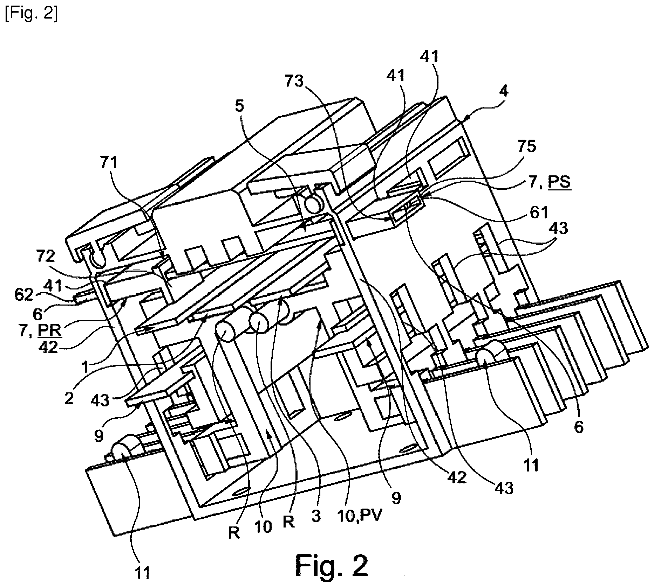

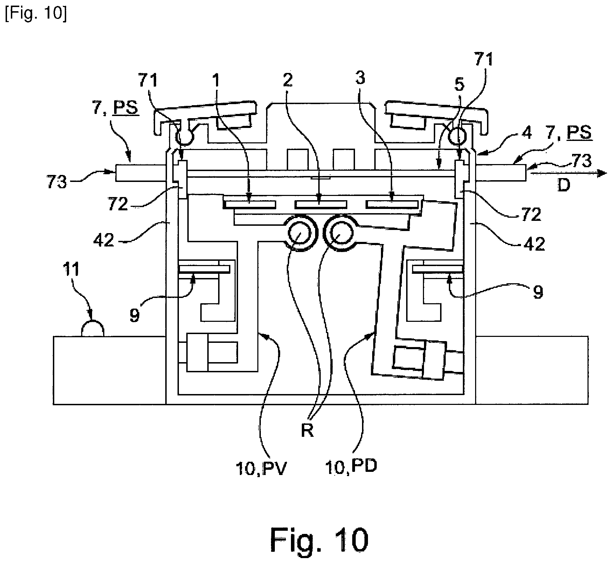

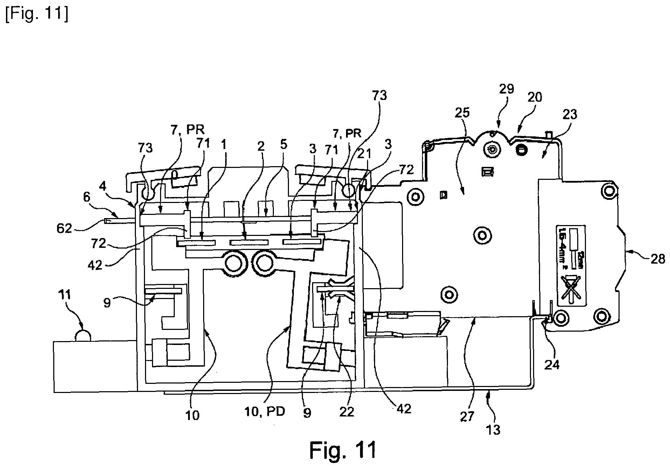

Le dispositif de distribution électrique comprend au moins un organe de verrouillage 10 monté mobile en rotation dans le boîtier 4 autour d'un axe de rotation R entre une position verrouillée PV et une position déverrouillée PD. Dans ladite position verrouillée PV (figures 2, 3, 4, 5, 10), ledit organe de verrouillage 10 est agencé pour venir en appui contre ladite butée 72 en position sortie PS dudit manchon isolant 7, de sorte à interdire le coulissement du manchon isolant 7 par rapport au conducteur de phase 5 selon la direction D. Dans ladite position déverrouillée PD (figures 10 et 11), ledit organe de verrouillage 10 est agencé pour libérer ladite butée 72 en position sortie PS dudit manchon isolant 7, de sorte à autoriser le coulissement du manchon isolant 7 par rapport au conducteur de phase 5 selon la direction D.

Cette configuration avantageuse permet de verrouiller le manchon isolant 7 dans la position sortie PS pour éviter que le manchon isolant 7 ne soit coulissé accidentellement et garantir l'isolation de l'extrémité de raccordement 6 du conducteur de phase 5, lorsque ledit au moins un organe de verrouillage 10 est dans la position verrouillée PV.

Dans ce cas, l'organe de verrouillage 10 comprend préférentiellement un levier d'actionnement 11 avec une partie saillante à l'extérieur dudit boîtier 4 agencée pour entraîner la rotation de l'organe de verrouillage 10 de la position verrouillée PV vers la position déverrouillée PD.

Avantageusement, lorsqu'une force d'appui est exercée sur la partie saillante du levier d'actionnement 11, par exemple par appui du boîtier de protection 23 de l'appareil électrique modulaire 20 sur la partie saillante du levier d'actionnement 11, alors l'organe de verrouillage 10 passe de la position verrouillée PV à la position déverrouillée PD, puis le manchon isolant 7 peut passer de la position sortie PS à la position rentrée PR par coulissement le long du conducteur de phase 5.

Préférentiellement, le dispositif de distribution électrique comprend des deuxièmes moyens de rappel 12 disposés à l'intérieur du boîtier 4 et reliés mécaniquement audit organe de verrouillage 10 et agencés pour emmagasiner de l'énergie mécanique de la position verrouillée PV vers la position déverrouillée PD et pour relâcher ladite énergie mécanique de la position déverrouillée PD vers la position verrouillée PV.

Avantageusement, les deuxièmes moyens de rappel 12 permettent un retour automatique de l'organe de verrouillage 10 de la position déverrouillée PD vers la position verrouillée PV. Plus particulièrement, lorsqu'une force d'appui est exercée sur la partie saillante du levier d'actionnement 11, par exemple par appui du boîtier de protection 23 de l'appareil électrique modulaire 20 sur la partie saillante du levier d'actionnement 11, alors l'organe de verrouillage 10 passe de la position verrouillée PV à la position déverrouillée PD et les deuxièmes moyens de rappel 12 emmagasinent de l'énergie mécanique. Lorsque cette force d'appui cesse, alors les deuxièmes moyens de rappel 12 libèrent au moins une partie de cette énergie mécanique et il en résulte que l'organe de verrouillage 10 passe automatiquement de la position déverrouillée PD à la positon verrouillée PV. Cette configuration avantageuse permet de garantir le verrouillage du manchon isolant 7 dans la position sortie PS pour éviter que le manchon isolant 7 ne soit coulissé accidentellement et garantir l'isolation de l'extrémité de raccordement 6 du conducteur de phase 5, lorsque l'utilisateur retire l'appareil électrique modulaire 20 du dispositif de distribution électrique.

De préférence, le dispositif de distribution électrique comprend une barre de distribution de terre 13 disposée à l'extérieur du boîtier 4.

Avantageusement, le dispositif de distribution électrique permet également de distribuer un potentiel de terre et donc de raccorder ledit au moins un appareil électrique modulaire 20 au potentiel de terre par l'intermédiaire d'une borne de connexion à la terre 24 décrite ci-après.

La barre de distribution de terre 13 peut être un rail métallique.

En référence aux figures 5 et 11, l'invention concerne également un ensemble comprenant au moins un appareil électrique modulaire 20 contenu dans un boîtier de protection 23 que comprend l'appareil électrique modulaire 20 et caractérisé en ce que ledit ensemble comprend un dispositif de distribution électrique tel que décrit précédemment.

Préférentiellement, le boîtier de protection 23 présente un format modulaire. Plus particulièrement, le boîtier de protection 23 présente une forme globalement parallélépipédique avec une première face principale 25 et une deuxième face principale 26, et des faces latérales, respectivement arrière 27 , inférieure 28 , avant 29 et supérieure 30 s'étendant de l'une à l'autre des première et deuxième faces principales 25, 26, et avec une largeur, c'est-à-dire l'écart entre les première et deuxième faces principales 25, 26, égale à un nombre entier de fois une distance prédéterminée, appelée module.

L'appareil électrique modulaire 20 peut être un disjoncteur ou un disjoncteur différentiel ou un interrupteur différentiel ou un interrupteur ou un contacteur.

De préférence, ledit appareil électrique modulaire 20 comprend une borne de connexion de la phase 21, laquelle est agencée pour être raccordée électriquement au conducteur de phase 5 (figures 5 et 11).

Les figures 5 et 11 montrent un ensemble dans lequel la borne de connexion de la phase 21 de l'appareil électrique modulaire 20 est reliée à l'extrémité de raccordement 6 du conducteur de phase 5 du dispositif de distribution électrique selon l'invention.

De préférence, ledit appareil électrique modulaire comprend une borne de connexion du neutre 22, laquelle est agencée pour être raccordée électriquement à la barre de distribution de neutre 9 (figures 5 et 11).

Dans ce cas, ladite borne de connexion du neutre 22 peut comprendre une pince conductrice qui est saillante à l'extérieur du boîtier de protection 23, la pince conductrice étant agencée pour pincer la barre de distribution de neutre 9.

Cette configuration avantageuse du dispositif de distribution électrique permet de remplacer un câble de ligne de neutre de l'appareil électrique modulaire généralement utilisé dans l'art antérieur par une borne de connexion du neutre 22 sous la forme d'une pince conductrice de l'appareil électrique modulaire 20 selon l'invention. Lors de l'installation, le temps de câblage est supprimé. Il en résulte une grande simplicité d'installation dudit au moins un appareil électrique modulaire 20 dans le dispositif de distribution électrique, ainsi qu'un gain de place.

Les figures 5 et 11 montrent un ensemble dans lequel la borne de connexion du neutre 22 de l'appareil électrique modulaire 20 est reliée à la barre de distribution de neutre 9 du dispositif de distribution électrique selon l'invention.

De préférence, ledit appareil électrique modulaire 20 comprend une borne de connexion à la terre 24, laquelle est agencée pour être raccordée électriquement à la barre de distribution de terre 13 (figure 11).

Dans ce cas, ladite borne de connexion de terre 24 peut comprendre un organe conducteur en forme de U qui est en partie saillant à l'extérieur du boîtier de protection 23, l'organe conducteur étant agencé pour être en contact avec la barre de distribution de terre 13 (figure 11).

La figure 11 montre un ensemble dans lequel la borne de connexion à la terre 24 de l'appareil électrique modulaire 20 est reliée à la barre de distribution de terre 13 du dispositif de distribution électrique selon l'invention.

La figure 11 montre également un ensemble dans lequel la borne de connexion de la phase 21 de l'appareil électrique modulaire 20 est reliée à l'extrémité de raccordement 6 du conducteur de phase 5, la borne de connexion du neutre 22 de l'appareil électrique modulaire 20 est reliée à la barre de distribution de neutre 9 et la borne de connexion à la terre 24 de l'appareil électrique modulaire 20 est reliée à la barre de distribution de terre 13 du dispositif de distribution électrique selon l'invention.

Cette configuration avantageuse permet en une seule opération le raccordement de chaque borne de connexion de la phase 21, du neutre 22, à la terre 24 de l'appareil électrique modulaire 20 au dispositif de distribution électrique.

La borne de connexion de la phase 21 peut être choisie parmi une borne à cage ou à vis.

Préférentiellement, ledit organe de verrouillage 10 est configuré pour être déplacé en rotation de la position verrouillée PV vers la position déverrouillée PD par appui dudit du boîtier de protection 23 sur l'organe de verrouillage 10.

Dans ce cas, la partie saillante du levier d'actionnement 11 est de préférence configurée pour entraîner la rotation de l'organe de verrouillage 10 de la position verrouillée PV vers la position déverrouillée PD par appui dudit boîtier de protection 23 sur la partie saillante du levier d'actionnement 11.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de distribution électrique comprenant au moins :
• une barre de distribution de phase (1, 2, 3) logée à l'intérieur d'un boîtier (4), et
• au moins un conducteur de phase (5) s'étendant longitudinalement selon une direction D et raccordé électriquement à ladite barre de distribution (1, 2, 3), ledit au moins un conducteur de phase (5) comprenant au moins une extrémité de raccordement (6) saillante à l'extérieur du boîtier (4) au travers d'un premier orifice (41) dudit boîtier (4),
dispositif de distribution **caractérisé en ce qu'**il comprend au moins un manchon isolant (7) monté coulissant par rapport audit au moins un conducteur de phase (5) le long de la direction D entre une position sortie (PS) dans laquelle le manchon isolant (7) recouvre ladite extrémité de raccordement (6) et une position rentrée (PR) dans laquelle ledit manchon isolant (7) est disposé à l'intérieur du boîtier (4).

2. Dispositif de distribution électrique selon la revendication 1, **caractérisé en ce qu'**il comprend des premiers moyens de rappel (8) disposés à l'intérieur du boîtier (4) et reliés mécaniquement audit manchon isolant (7) et agencés pour emmagasiner de l'énergie mécanique de la position sortie (PS) vers la position rentrée (PR) et pour relâcher ladite énergie mécanique de la position rentrée (PR) vers la position sortie (PS).

3. Dispositif de distribution électrique selon la revendication 2, **caractérisé en ce que** les premiers moyens de rappel (8) sont agencés pour être relâchés dans la position sortie (PS) et **en ce que** les premiers moyens de rappels (8) sont agencés pour être contraints dans la position rentrée (PR).

4. Dispositif de distribution électrique selon les revendications 2 à 3, **caractérisé en ce que** les premiers moyens de rappel (8) comprennent un ressort.

5. Dispositif de distribution électrique selon l'une quelconque des revendications 1 à 4, **caractérisé en ce que** le manchon isolant (7) comprend une première extrémité (71) disposée à l'intérieur du boîtier (4), ladite première extrémité (71) comprenant une butée (72) agencée pour venir en appui contre une paroi (42) du boîtier (4) comprenant ledit premier orifice (41) dans la position de sortie (PS).

6. Dispositif de distribution électrique selon l'une quelconque des revendications 1 à 5, **caractérisé en ce qu'**il comprend au moins une barre de distribution de neutre (9) logée à l'intérieur dudit boîtier (4) et étant disposée dans un plan parallèle au plan comprenant ladite au moins une barre de distribution de phase (1, 2, 3).

7. Dispositif de distribution électrique selon la revendication 6, **caractérisé en ce que** ledit boîtier (4) comprend un deuxième orifice (43) débouchant sur ladite barre de distribution de neutre (9).

8. Dispositif de distribution électrique selon l'une quelconque des revendications 5 à 7, **caractérisé en ce qu'**il comprend au moins un organe de verrouillage (10) monté mobile en rotation dans le boîtier (4) autour d'un axe de rotation (R) entre une position verrouillée (PV) et une position déverrouillée (PD), dans ladite position verrouillée (PV), ledit organe de verrouillage (10) étant agencé pour venir en appui contre ladite butée (72) en position sortie (PS) dudit manchon isolant (7) de sorte à interdire le coulissement du manchon isolant (7) par rapport au conducteur de phase (5) selon la direction D et dans ladite position déverrouillée (PD), ledit organe de verrouillage (10) étant agencé pour libérer ladite butée (72) en position sortie (PS) dudit manchon isolant (7) de sorte à autoriser le coulissement du manchon isolant (7) par rapport au conducteur de phase (5) selon la direction D.

9. Dispositif de distribution électrique selon la revendication 8, **caractérisé en ce que** l'organe de verrouillage (10) comprend un levier d'actionnement (11) avec une partie saillante à l'extérieur dudit boîtier (4) agencée pour entraîner la rotation de l'organe de verrouillage (10) de la position verrouillée (PV) vers la position déverrouillée (PD).

10. Dispositif de distribution électrique selon l'une quelconque des revendications 8 à 9, **caractérisé en ce qu'**il comprend des deuxièmes moyens de rappel (12) disposés à l'intérieur du boîtier (4) et reliés mécaniquement audit organe de verrouillage (10) et agencés pour emmagasiner de l'énergie mécanique de la position verrouillée (PV) vers la position déverrouillée (PD) et pour relâcher ladite énergie mécanique de la position déverrouillée (PD) vers la position verrouillée (PV).

11. Dispositif de distribution électrique selon l'une quelconque des revendications 1 à 10, **caractérisé en ce qu'**il comprend une barre de distribution de terre (13) disposée à l'extérieur du boîtier (4).

12. Ensemble comprenant au moins un appareil électrique modulaire (20) contenu dans un boîtier de protection (23) que comprend l'appareil électrique modulaire (20) et **caractérisé en ce que** ledit ensemble comprend un dispositif de distribution électrique selon l'une quelconque des revendications 1 à 11.

13. Ensemble selon la revendication 12, **caractérisé en ce que** ledit appareil électrique modulaire (20) comprend une borne de connexion de la phase (21), laquelle est agencée pour être raccordée électriquement au conducteur de phase (5).

14. Ensemble selon l'une quelconque des revendications 12 à 13 en combinaison avec la revendication 6, **caractérisé en ce que** ledit appareil électrique modulaire comprend une borne de connexion du neutre (22), laquelle est agencée pour être raccordée électriquement à la barre de distribution de neutre (9)

15. Ensemble selon la revendication 14, **caractérisé en ce que** ladite borne de connexion du neutre (22) comprend une pince conductrice qui est saillante à l'extérieur du boîtier de protection (23), la pince conductrice étant agencée pour pincer la barre de distribution de neutre (9).

16. Ensemble selon l'une quelconque des revendications 12 à 15 en combinaison avec la revendication 10, **caractérisé en ce que** ledit appareil électrique modulaire comprend une borne de connexion à la terre (24), laquelle est agencée pour être raccordée électriquement à la barre de distribution de terre (13).

17. Ensemble selon la revendication 14, **caractérisé en ce que** ladite borne de connexion de terre (24) comprend un organe conducteur en forme de U qui est en partie saillant à l'extérieur du boîtier de protection (23), l'organe conducteur étant agencé pour être en contact avec la barre de distribution de terre (13).

18. Ensemble selon l'une quelconque des revendications 12 à 17 en combinaison avec la revendication 8, **caractérisé en ce que** ledit organe de verrouillage (10) est configuré pour être déplacé en rotation de la position verrouillée (PV) vers la position déverrouillée (PD) par appui dudit boîtier de protection (23) sur l'organe de verrouillage (10).

19. Ensemble selon la revendication 18 en combinaison avec la revendication 9, **caractérisé en ce que** la partie saillante du levier d'actionnement (11) est configurée pour entraîner la rotation de l'organe de verrouillage (10) de la position verrouillée (PV) vers la position déverrouillée (PD) par appui dudit boîtier de protection (23) sur la partie saillante du levier d'actionnement (11).
